Europäisches Patentamt

European Patent Office

Office européen des brevets

(11) Publication number: **0 386 278 B1**

# EUROPEAN PATENT SPECIFICATION

(45) Date of publication of patent specification: **20.10.93** (51) Int. Cl.⁵: **B65H 27/00**, B65H 9/16, F16C 13/00

(21) Application number: **89103834.1**

(22) Date of filing: **04.03.89**

(54) **Alignment and transport roll made of flexible material.**

(43) Date of publication of application:
**12.09.90 Bulletin 90/37**

(45) Publication of the grant of the patent:
**20.10.93 Bulletin 93/42**

(84) Designated Contracting States:
**AT BE CH DE ES FR GB IT LI NL SE**

(56) References cited:
**EP-A- 0 085 457**     **CH-A- 440 858**
**GB-A- 8 774**     **US-A- 3 107 947**
**US-A- 3 148 877**     **US-A- 3 929 327**
**US-A- 4 775 142**

(73) Proprietor: **International Business Machines Corporation**
**Old Orchard Road**
**Armonk, N.Y. 10504(US)**

(72) Inventor: **Markgraf, Hans-Georg**
**Aidlinger Strasse 1**
**D-7044 Ehningen(DE)**
Inventor: **Moll, Josef**
**Hohe Strasse 2**
**D-7034 Gärtringen(DE)**
Inventor: **Schroth, Klaus**
**Ahornweg 44**
**D-7031 Altdorf(DE)**

(74) Representative: **Mönig, Anton, Dipl.-Ing.**
**IBM Deutschland Informationssysteme GmbH,**
**Patentwesen und Urheberrecht**
**D-70548 Stuttgart (DE)**

## Description

The invention relates to an alignment and transport roll made of flexible material.

A transport and alignment roll made of somewhat flexible material is shown in IBM Technical Disclosure Bulletin, Vol. 13, No. 1, June 1970, pp 217 - 218, for transporting documents having a magnetic stripe on it. Seen from the side, the roll is provided with fingers. As a card is being driven these fingers are deflected inward for creating a driving force and an aligning force to register the card against the registration surface. Thus the card is registered and transported toward a reading head. These fingers serve also to lift the trailing edge of the card to the other side for reversing the transport direction of the card without changing the turn direction of the roll. That means that the card is inserted by being clamped between a card guide on one side of the two rolls and being transported out of the card reader by being clamped between the other side of the rolls and a second card guide.

For aligning a document like a piece of paper against a side registration guide usually tilted aligning rolls are used which first align the document against a side registration surface. Then the piece of paper is transported by other transport means that act in parallel to the side aligning surface. If in those cases the aligning roll is still in contact with a piece of paper it still creates a force on the paper and against the aligning surface which may damage the side edge of said transported and aligned piece of paper. If such a creation of force is not tolerable the aligning roll has to be lifted off the transported and aligned piece of paper that means a more complex construction. An example for such a construction is shown in IBM Technical Disclosure Bulletin, Vol. 17, No. 7, Dec. 1974. page 2091 - 2092.

To diminuish the force acting on an already sidewise aligned paper there is known from US Patent 3 148 877 a specially designed roll. This roll is divided into sectors by radial slots and made of flexible material. The tilted aligner roll is acting in an angle toward the side aligning surface and after aligning is reached the sectors in contact with the paper are slightly deflected so that they move in parallel to the aligning surface in direction of transport. Aligning in this construction is performed only in one transport direction. In reverse transport direction no aligning against the registration surface is possible.

From US patent 3 929 327 a document transport and registration apparatus is known which comprises an idler roller and a frusto-conical drive roller which cooperate in pinching engagement to advance a document along a predetermined path. The drive roller is of flexible, resilient material which is deformed radially when advancing the document, whereby a misaligned document is automatically brought into alignment and registration with a guide edge. This known frusto-conical drive roller gives no hint for forming the cross section curved or for providing the roll with a ringlike and thicker outer circumferential part as it is basically the subject of the present invention.

From CH-440 858 a wheel-like or roll-like body is known having a specially formed connection part between the hub-part and the outer circumferential part. By this specially formed part the roller can be compressed radially for accepting even very thick parts in transport movement. This known roll has no aligning function what so ever. It also gives no hint in the direction of the curved cross section and the ringlike thicker outer circumferential part in the sense of the present invention.

The invention as basically laid down in claim 1 and in the other basic independent claim 4 solves in advantageous manner the problem that effective aligning and transporting is performed by only one roll that does not damage the edge of an item transported when the aligning is finished as the aligning force than is reduced automatically but is still active, that easily adapts to different thickness of the item to be transported, that provides a nearly constant pressure area between the item to be transported and the roll so that also with high pressure the paper is not damaged during aligning and transport.

The roll in accordance with the present invention is made of flexible material, has a curved cross section and comprises a ring-like thicker outer circumferential part. The roll in accordance with the present invention is characterized by the application of alignment force in one and the same direction, the direction in which the curvature of the roll points and the deflection is active, regardless of the transport direction. This assures that in forward and backward transport direction an item to be transported is always aligned against the same side registration.

Advantageously the alignment force is implied to the item to be transported by rotating the roll either by drive means acting on the roll itself or moving the roll by the item to be transported in the transport directions.

In accordance with a further development of the invention the thicker outer circumferential part may comprise a circular contour and may have the form of a closed circle of a curved hook. Preferably as flexible material a castable polyurethane polyester with a hardness of 60 Shore A is used.

In accordance with a further development of the invention the roll can be put together with a second roll to form a roller pair which is twice as effective in aligning than one simple roll acting against a fixed item support.

A preferred application of the roll in accordance with the present invention is the use in an aligning station of the device for processing items. Those items can, for example, be passbooks that have variable paper thickness as there are sometimes only one sheet thickness underneath the rollers and sometimes several sheets. The invention is able to cope with, for example, a paper thickness between 0.3 mm and 3 mm. So in a passbook print unit in which also the magnetic stripe provided on the pass book is to be read by a magnetic head has to be aligned correctly for reading and writing purposes. Also for a neat printing exact aligning and transporting of the passbook in the print unit is necessary. This is possible with the application of the present invention.

The roll in accordance with the present invention can also be used advantageously to align and transport continuous forms.

The invention as laid down in the attached claims will be described in more details by the following detailed description. This detailed description shows by way of examples and by means of the attached drawing the invention. In the attached drawing the figures show

Fig. 1 a front view, partly in cross section of the roll in accordance with the present invention;

Fig. 2 schematically a graph of the force over the deflection;

Fig. 3 in cross section the undeflected and the somewhat deflected roll due to excentric loading of the force;

Fig. 4 different shapes and points of attachment of the outer circumferential part of the roll in accordance with the present invention;

Fig 5 schematically different states of roll deformation;

Fig 6 different force diagrams during different states of deformation of the roll in connection with Fig. 5;

Fig 7 different states of deformation of the alignment roll;

Fig 8 different force diagrams associated to the different states of deformation shown in Fig. 7;

Fig 9 schematically a working scope of the alignment roll in accordance with the present invention and possible variations schematically;

Fig 10 possibilities of variation of changing the parameters of the alignment roll;

Fig 11 a front view of the alignment roll together with a limitation or supporting structure resp.;

Fig 12 schematically variation possibilities for changing the parameters of the alignment roll and the limitation or supporting structure resp.;

Fig 13 schematically the working scope of the aligning roll together with the limitation or supporting structure resp.;

Fig. 14 two different states of deflection and deformation of the alignment roll with limitation structure;

Fig. 15 a transport and aligning unit in a passbook printing unit, and

Fig. 16 a view from top onto the roll in accordance with the present invention in two different positions, deflected and deformed by opposite turning moments.

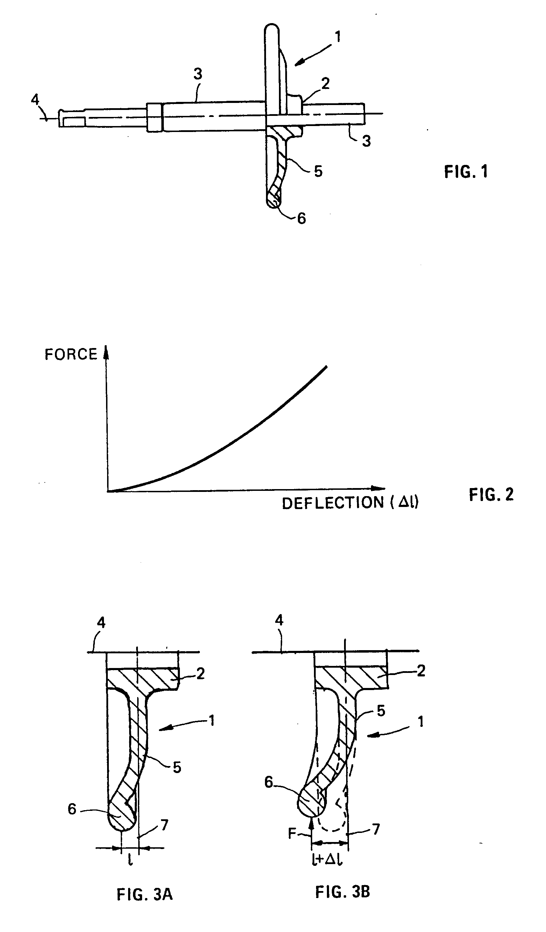

In the front view of Fig. 1 the alignment and transport roll 1 is shown. Roll 1 with its hub 2 is fixed on a shaft 3 which rotates about revolution axis 4. Fixed to hub 2 is a connecting structure 5 that connects hub 2 with an outer ring-like thicker circumferential part 6. As can be seen well in Fig. 1, the cross section of roll 1 is curved. That means that the ring-like outer circumferential part 6 does not rotate in the same plane as hub 2 or the connecting structure 5 close to the hub. Thus, if force is exerted radialy onto the outer circumferential part 6, the latter is deflected excentrically. The direction of this deflection is usually the one in which the curvature of the cross section points or indicates respectively.

Roll 1 could be made of any flexible material, that is applicable for example felt, leather, foam, rubber, plastic and the like. The main characteristic is to transmit different forces encountered. Preferably, an elastomere that is capable of being casted is used which is in the example built polyurethane-polyester of 60 Shore A hardness. Using this material provides best results with ease of production, best friction with fewest wear, easy deflection and deformation with fast and correct restoring or elastic recovery respectively.

In Fig. 2 the force in dependence of the deflection of roll 1 is shown. The force increases progressively with increasing deflection. This characteristic is very well comparable with the characteristic of a spring. As with a spring the characteristic can be changed in accordance with necessity. As will be shown later, one preferred embodiment for using the roll is, to align and to transport a passbook, as an item to be transported, toward a print unit and toward reading unit for reading the magnetic stripe provided on the passbook. To print a passbook neatly and to read and write the existing magnetic stripe, the passbook has to be aligned.

As is well-known, passbooks may have different sizes concerning length and width, different thicknesses and may vary in surface finish and rigidity. Additionally, climatic condition factors affect function in all cases. Furthermore, the function should be bidirectional with transport in both direction and alignment necessarily only in one direction.

That means that the alignment and transport roll has to work under a variety of physical transport characteristics and under different environmental conditions while the passbook is being aligned and transported.

Roll 1 in accordance with the present invention can cooperate with many different outer supports between which the item to be transported is clamped and aligned. There could be a fixed surface, there could be either rolls or bearings or there could be a driven support roll as support or counteracting part, respectively. Certainly most effectively is the same driven roll as counterpart.

The deflection function of roll 1 in accordance with the present invention is shown in Fig. 3. In Fig. 3A it is depicted that the ring-like outer part 6 is excentrically displaced by distance 1 from the rotational plane 7 in which hub part 2 and the immediately adjacent part of the connecting structure 5 is rotating.

The distance 1 is taken between plane 7 and the lower most part of the ring-like outer circumferential part 6. upon deflection a force F is acting on the lower most part of the outer circumferential part 6 of roll 1 as shown in Fig. 3B. Thus, as shown by the solid representation of the deflected roll 1, the lower most part is pushed toward the rotational axis 4 and at the same time to the left, so that there is an increased excentric deflection $1 + \Delta 1$ between the application point of force F and the rotational plane 7. In dashed line the undeflected representation of roll 1 is also shown in Fig. 3B.

If roll 1 is compressed in a specified manner, it deflects to the left as shown in Fig. 3B. The excentric loading of the force F ensures this defined direction of motion of roll 1. If no force is acting on roll 1, then it has the configuration as shown on Fig. 3A.

The aligning force of roll 1 always acts in the direction in which curvature of roll 1 points and the deflection is increased when excentric force F is loaded. That loading means that at the loading point also the radius of roll 1 is diminuished. The aligning force is applied to the item to be transported by roll 1 and is always applied in the same direction regardless if the item itself is externally transported and is in contact with roll 1 or if roll 1 itself is turned.

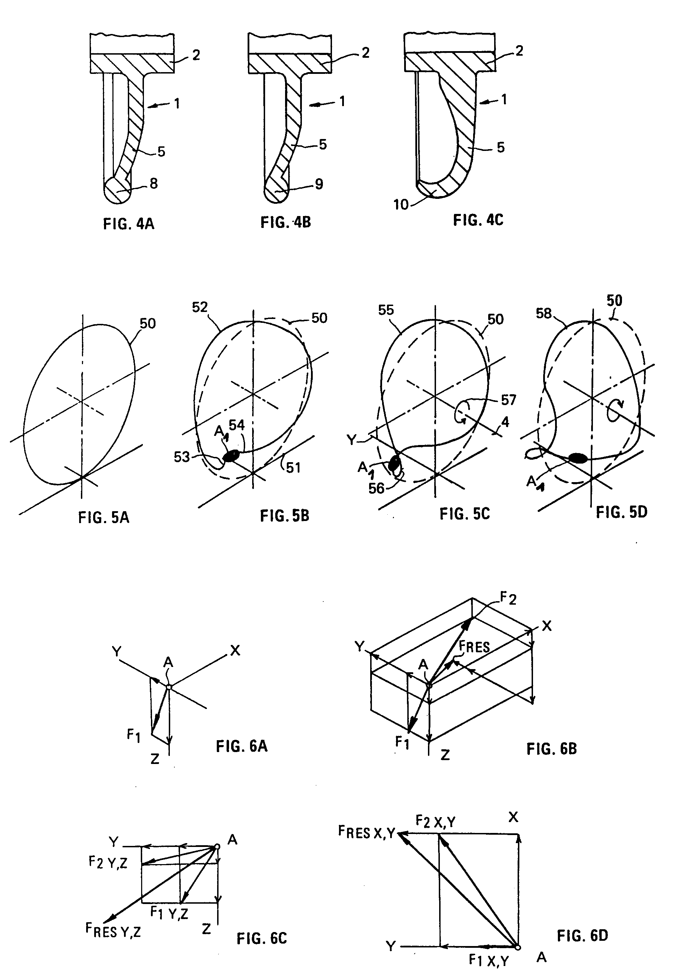

The ring-like thicker outer circumferential part 6, which also can be considered to have the form of a doughnut-shaped ring, of roll 1 comprises a circular contour opposite the item to be transported. This is shown in all Figures showing that part and especially it is shown in Fig. 4A to Fig. 4C. Preferably the outer contour has a diameter of twice the radius of the contacting area $A_1$ which is larger than the thickness of the connecting structure 5. The cross section of the thicker outer circumferential part 6 could be a circle like in Fig. 4A attached more or less symmetrically to the lower part of structure 5 or could be a circle attached more to the right of structure 5 as shown in Fig. 4B, or it could be a curved hook 10 as shown in Fig. 4C. The form shwon in Fig. 4C is in principle ideal, because there is no flipping over anymore when the item to be transported reached the aligning surface as explained later on. Therefore no additional limitation or supporting structure is required to achieve a large variation in thickness of items to be transported.

The contact area $A_1$, that is the lower part of outer part 6, or more generally spoken always the outer most part of roll 1, has always an equally curved area that is in contact with the item to be transported, for example a passbook, independent of the degree of deflection. That means that the contact area between the item to be transported and the roll is more or less constant regardless of the thickness of the item to be transported and thus the force value and the intensity of the deflection. By this means always a relatively large area $A_1$ of roll 1 is in a contact with the item to be transported which mostly is paper so that the latter is not damaged by sharp edges or small contact areas generating a high area pressure.

In connection with Fig. 5 and 6 in the following the operation of roll 1 in accordance with the present invention will be explained in more detail. In Fig. 5 this is done by the depiction of the track of travel of an outside radius point of roll 1. Fig. 5A shows the unloaded, Fig. 5B shows the excentric force applied stationary showing the initial stress and Fig. 5C shows the initial stress and the rotation. Fig. 6 shows the force diagrams from different angles.

For better understanding Fig. 5A shows as solid line in a perspective view the circle of the outside radius of the unloaded roll. This circle is also shown in Fig. 5B and 5C in broken lines for better comparison with the form of the outside radius of roll 1. Fig. 5B shows in dashed line 50 the undeformed outside of roll 1 and with the solid line 52 the deformed outer roll track. With A the contact area between roll and underneath lying medium is depicted. This is the point of application between roll and medium. This point A is left from line 51 and both roll areas 53 and 54 immediately adjacent the point of application A are symmetrically deflected to the left from line 51 toward the not shown aligning surface. This direction corresponds with direction y in Fig. 6.

Fig. 5C shows the roll deformation after the initial stress has been loaded and rotation has been started in direction of arrow 57 around rotational axis 4. The outer circle of roll 1 now has a contour as depicted by solid line 55. Portion 56 of that outer line is not tilted toward the not shown aligning surface in the contact area A. Around this point of application A between roll and medium the roll is now no more symmetrically. The part 56 point actively in direction y toward the aligning surface. If the direction of rotation around rotational axis 4 is reversed as shown in Fig. 5D then part 58 points also actively in direction y. That means that there is always a component in the direction y so that the direction of alignment is not changed when the direction of rotation of roll 1 is changed. The flexible behaviour of roll 1 is such that this advantageous operation of the roll is provided.

Fig. 6A shows three axis originating in the application point A with direction x in which the transport should be performed, direction y in which aligning is performed and direction z in which force is applied vertically to the medium. There is applied a force $F_1$ having a component in the y and component in the z direction. This configuration corresponds to Fig. 5B, the initial stress position without rotation of the roll. Upon rotation around axis 4 a second force $F_2$ resulting from the momentum is applied. This is shown in Fig. 6B. This force $F_2$ has a component in x direction for propelling the medium, and in y direction for aligning the medium and also in z direction for implying pressure to the medium. Force $F_2$ is super-imposed to the initial stress force $F_1$, so that there results a resulting force $F_{res}$. The representation in Fig. 6B is made in an isometric view.

For a better overview Fig. 6C and Fig. 6D show the different components. In Fig. 6C there is x = 0, that means we are looking in transport direction and in Fig. 6D y = 0, that means we are looking from top onto the point of application A. Fig. 6C shows two components in y direction stemming from the force $F_{2\ y,z}$ and $F_{1\ y,z}$ as well as two components in z direction stemming from $F_{1\ y,z}$ and $F_{2\ y,z}$. Both are super-imposed to the resulting force $F_{res\ y,z}$. The same is true in Fig. 6D for two components in y direction stemming from $F_{1\ x,y}$ and $F_{2\ x,y}$ and in transport direction x only from $F_{2\ x,y}$. This is superimposed with a resulting force $F_{res\ x,y}$ pointing in diagonal direction from point of application A in aligning and transporting direction. The three dimensional force vector $F_{res}$ is shown in the isometric representation in Fig. 6B.

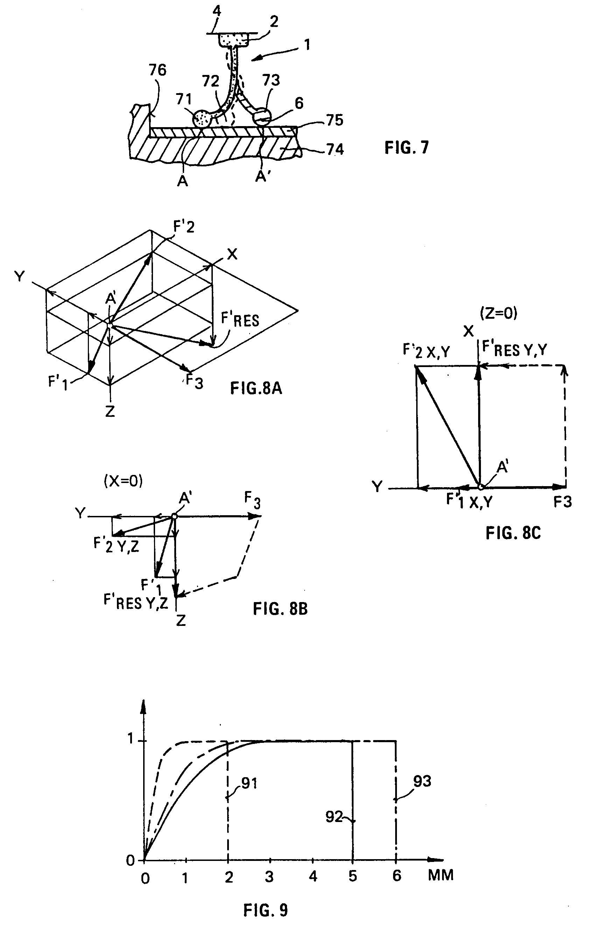

If the forces shown in Fig. 6B exceed their opposed frictional forces the passbook as medium to be transported moves toward the aligning surface 76 shown in Fig. 7 and along it in transport direction. When the passbook meets the aligning surface and starts to begin to be transported along the aligning surface in transport direction, then the forces shown in Fig. 6D let the point of application A travel in a direction opposite to the aligning direction. That means point A travels away from the aligning surface. The forces in transport direction don't change thereby. Therefore, the roll is deformed as shown in Fig. 7. The forces perpendicular to the transport direction are balanced when the point of application A' is not moving anymore vertically to the aligning surface.

The different states of the travelling of point of application A is shown schematically in Fig. 7. Between ring-like thicker outer part 6 of roll 1 and its point of application A and a support 74 an item to be transported 75, e.g. a passbook is clamped. On the left hand side in Fig. 7 there is shown the side aligning surface 76. With 71 the position is shown of deflected roll 1 till passbook 75 reaches the side aligning surface 76. Position 72, shown in dashed line shows the deflected roll 1 during travelling stage from position 71 to position 73. Position 73 shows deflected roll in equilibrium of forces after aligning is reached and further transport is going on, maintaining the aligning during transport at that stage. Thus, after reaching the aligning surface 76 by item 75 the application point A of roll 1 travels from position 71 to position 73 during further transportation to the application point A' and then remains in position 73 during further transportation.

It should be noted in connection with Fig. 7, that the circular contour of the thicker outer part 6 presents a contact area around and including the point of application A essentially in the form of an ellipse which independently of the deflection has more or less constant size. This is due to the circle-like contour of the outer circumferential shape of the thicker part 6. As very well can be seen in Fig. 3B - 3D item 75 is always contacted by an ellipse formed of the deflected and compressed outer part 6 of roll 1. Thus beside avoiding destruction of item 75 by sharp edges there is always provided the best application of power in each state of motion.

In connection with Fig. 8 the force ratios of the different positional states shown in Fig. 7 will be described. Fig. 8A shows in an isometric representation the different force vectors. They are similar to those of Fig. 6B. The origin of the coordinate system is now the point of application A' as shown in Fig. 7 with position 73, x is the transport direction, y is the direction toward the aligning surface 76 and z is the direction vertically to the support surface 74. $F_1'$ is the initial stress after reversal of roll 1. $F_2'$ is the force resulting from the momentum turning roll 1 around rotational axis 4 in transport

direction. $F_3$ is the force against the aligning surface 76. $F'_{res}$ is the resulting force, that means the force vector resulting of the three force vectors $F_1'$ + $F_2'$ + $F_3'$.

Shown in Fig. 8B are the components acting in y and z direction of the aforementioned force vectors as x = 0, that means it is the view into the transport direction. Fig. 8C shows the components in the x and y directions, that means we are looking from top onto roll 1 and z = 0. As can now be taken from both Figs. the force $F_3$ shows in the opposite direction as the aligning direction is that means away from the aligning surface 76. The lesser roll 1 is deflected after the reversal the bigger becomes the initial stress, the force $F_1'$, and the more the force vector approach the perpendicular line, that means the z-axis. When a certain point is passed, that means that the resultant force $F'_{res}$ points to the right of the z-axis and the point A' in Fig. 8, the item to be transported 75 is transported in the opposite direction, that means away from aligning surface 76. This flipping over of roll 1 is certainly not desired.

In connection with what has been described and said in connection with Fig. 8 there results a definition of a working scope for the roll in accordance with the present invention. Within such a working scope that depends on medium thickness and the function of alignment, the item to be transported is transported and simultaneously aligned, that means moved against the side aligning surface. In Fig. 9 over the medium thickness the function of alignment is depicted. Curve 91 shown in broken lines shows a steep increase in aligning force already with very thin items and an end of the aligning function at a medium thickness of 2 mm. Curve 92 shown in solid lines shows a wider range up to a medium thickness of 5 mm but having a rather flat increase in aligning function with thinner items to be transported. The third shown curve 93 depicted in dash-dotted lines shows a still wider working scope up to 6 mm thickness. The three different shown working scopes in Fig. 9 depend on various parameters of the aligning roll 1.

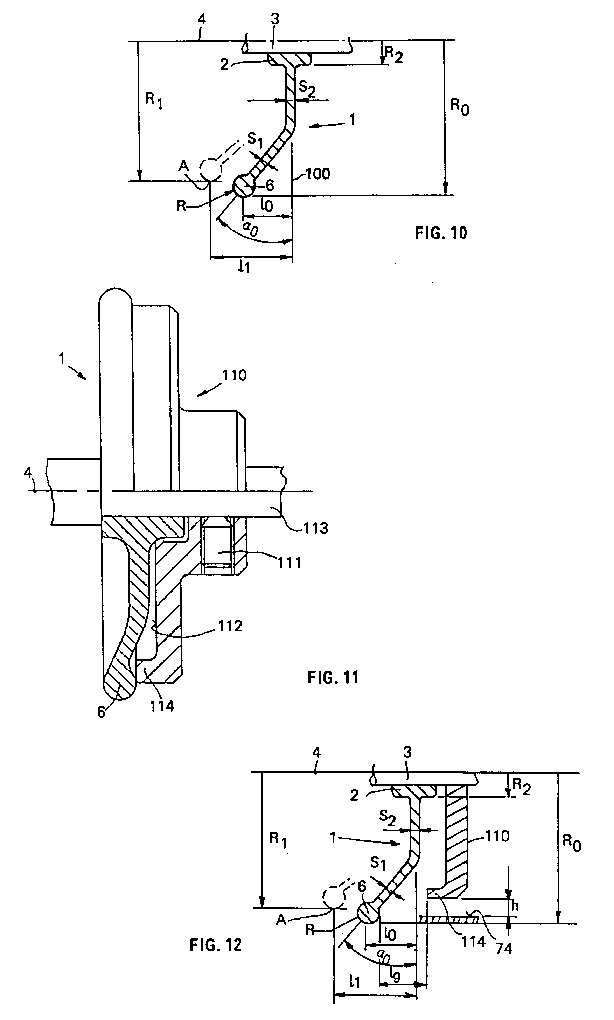

In connection with Fig. 10 parameters and dimensions are depicted which contribute to the variation possibilities for changing parameters of the roll. Those variable parameters are in particular:

$R_0$,      the radius of roll 1 in unloaded state;

$R_1$,      the active radius that means the distance between the deflected roll after initial stress and the rotational axis 4;

$l_0$,      the excentricity of roll 1, that means how far point A of roll 1 and the rotational plane 100 are distanced from each other;

$l_1$,      the distance between the rotational plane 100 and the rotational plane of the initially deflected roll corresponding to the radius $R_1$.

$\alpha_0$,      the angle before deflection of roll 1;

R,      the rolling radius that means the radius of the outer thicker circumferential part, if configured circle like which in practice is the easiest way to do it;

$S_1$,      the thickness of the part of roll 1 that is easily deformable because of the reversal;

$S_2$,      the thickness of that part of roll 1 that is heavily deformable because of the force ratio after reversal;

$R_2$,      the splicing radius for roll strengthening and fastening, that means the radius of the hub part 2 of roll 1;

       the elasticity of roll 1 measured in hardness in Shore A,

       the material with the friction ratio, the abrasion, the deformation and the reprogression.

All these afore-mentioned parameters can be varied and rents a way possible to optimize the necessary working scope of a specific roll. Thus, dependent on the application an optimized roll may be designed. Anyhow, a thus designed roll per se has a relative wide variety in coping with different tickness of the item to be transported.

As has been already mentioned in connection with the description of Fig. 7, roll 1 may be flip over into a position where its aligning force acts in a direction opposite to that wanted. To avoid this possibility a further development of the present invention provides a supporting structure 110 that is shown in Fig. 11 in connection with roll 1. The supporting structure 110 is fixed by screw 111 to axis 113 for corotation around rotational axis 4 together with roll 1. The diameter of this supporting structure 110 is smaller than the diameter of the unloaded roll 1. As shown in the cross-sectional part of Fig. 11, supporting structure 110 has a form of a cup-like disk with a recessed part 112 and a ring-like protruding rim 114. This rimlike protrusion 114 is provided on the outside radius. The supporting structure 110 provides a limitation function against the reversal motion of outer part 6 of roll 1 away from the aligning surface. That means that the limitation of supporting structure 110 is provided on that side of roll 1 which is opposite to the aligning surface or opposite to the side to which the roll 1 is curved, respectively. As shown in Fig. 11 outer part 6 rests on rim 114. This construction shown in Fig. 11 is rather strict in its limitation function. In accordance with the different applications there might be provided a gap between roll 1 and supporting structure 110, as for example indicated by the distance $l_g$ in Fig. 12.

Fig. 12 is a similar representation as the one of Fig. 10 with the addition, that supporting structure 110 is provided on axis 3 for corotation around rotational axis 4. Rimlike protruding portion 114 has a distance h between the outer radius of supporting structure 110 and the item support 74. Furthermore, there is said distance $1_g$ indicated between the surface of protruding rimlike portion 114 and the thicker outer circumferential part 6 of roll 1.

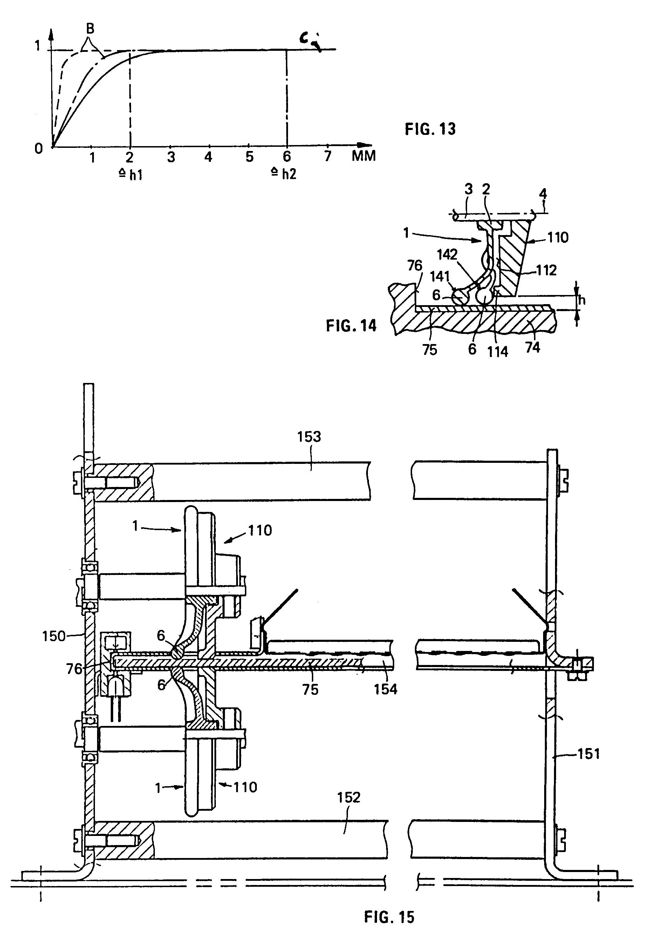

Dependent on the value for the distance h shown in Fig. 12, different working scope of a roll containing a supporting structure 110 may be defined. Those are shown, for example, in Fig. 13 with 2 mm for $h_1$ and with 6 mm for $h_2$. So the curves C show the working scope for automatically adapting the limitation means to various thicknesses. That means that in the example of curve C the limitation means adapts itself to the different thicknesses of the medium to be transported. Whereas the curves B are those limited in the thickness working scope by a non variable supporting structure 110 having different values for h and therefore a limited thickness working scope of 2 and 6 mm, resp. as shown in the examples.

The Fig. 14 shows a similar configuration as already shown and described in connection with Fig. 7. The supporting structure 110 which also could be designated as a limitation structure 110 limits the reversal motion of protruding thicker circumferential part 6 when it moves or travels, resp. from position 141 to position 142. It also can be seen that the recess portion 112 takes up part of the scrumbled roll 1 when it is in position 142. In that position outer part 6 rests on the protruding rim 114. As can well be seen from Fig. 14 the maximum thickness for the item to be transported 75 is limited by the distance betweeen the outer radius of supporting structure 110 and the support 74 which is given by the distance h. The structure shown in Fig. 14 clearly shows that the supporting structure 110 limits the deflection of outer part 6 away from side aligning guide 76 and thus avoids unwanted change of aligning direction and avoids flipping over of roll 1 into that unwanted stage.

The roll in accordance with the present invention and, for example, in the form as shown in Fig. 1 or as shown in Fig. 11, for example, can be coact with a flat supporting surface on which the medium to be transported rests. It also can be coact in pairs, so that for example two rolls as shown in Fig. 1 are arranged opposite to each other or two rolls as shown for example in Fig. 11 are arranged opposite to each other and coact together.

An example for the coacting of a pair of rolls as shown in Fig. 11 is shown in Fig. 15. There, two rolls 1 each with a limitation or supporting structure 110 respectively are fixed to a side wall 150. A second side wall 151 is provided and by connecting rods 152 and 153 both side walls 150 and 151 are connected with each other. Between the two side walls 150 and 151 an opening 154 is provided into which an item to be transported 75, for example a passbook, can be inserted. On the left hand side the side aligning guide 76 is provided to which passbook 75 should be aligned. The transport direction is perpendicular to the drawing plane of Fig. 15. As can be seen, the two thicker outer circumferential parts 6 are deflected by the passbook 75 inserted in opening 154. As furthermore can be seen, the thickness of the passbook to be inserted has to be less than the distance between the two outer radius of the two supporting structures 110. In turning the roller pair built of the two rolls 1, the passbook 75 is transported back and forth and at the same time aligned towards the side aligning surface 76.

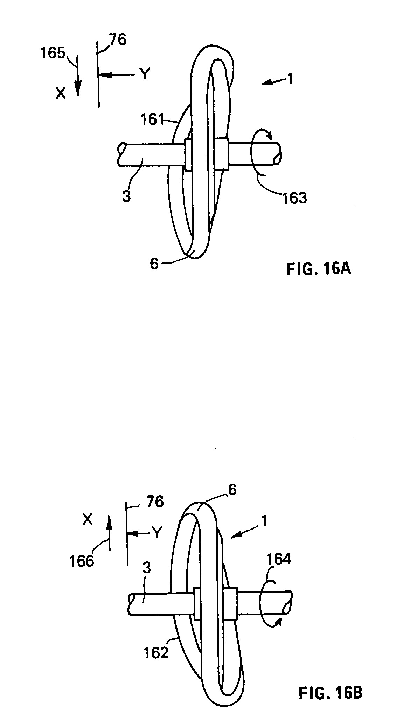

In Fig. 16 a top view of the roll 1 in accordance with the present invention is shown. The roll is curved to the right, that means in direction y towards aligning surface 76 which is only indicated. The ringlike thicker outer part 6 is shown in different deformation stages. In Fig. 16A axis 3 is turned in direction of arrow 163. This turning momentum turns part 161 of the ringlike part 6 of roll 1 towards the aligning surface 76, so that a component in y direction exists. This part 161 of roll 1 could be thought as an aligning roll that is tilted against the transport direction which instance of Fig. 16A is indicated by arrow 165.

The state shown in Fig. 16B is just opposite as now the transport direction is reversed in accordance with arrow 166, that means that axis 3 is turned in accordance with arrow 164 and part 162 of ringlike thicker outer part 6 is turned opposite to part 161 as shown in Fig. 16A. Also this part 162 could be considered as an aligning roll acting in the direction as indicated by part 162.

The two Figures 16A and 16B show clearly how upon mere changing of the turning direction of axis 3 a part of roll 1 automatically turns in aligning direction. The part turning in aligning direction is a part which transmits the aligning and transporting force to the medium to be aligned and to be transported.

The roll in accordance with the present invention in all its variations provides a wide working scope and a plurality of easily realized parameter changes. That means that high development costs for aligning structures are avoided. Also this design allows the use of simple casting equipment or die molds, resp., which means that more parts at less costs can be generated. No lift or turn mechanisms are necessary for aligning. Aligning is possible in forward and backward direction. Furthermore, it is easy to install the aligning roll axis 90° to the transport direction. The various medium characteristic can be matched by the design of roll and support parameters.

There is given a large variation which for satisfactory transport and aligning function even with different media and even with different thicknesses within one and the same media, for example a passbook. The roll adapts easily automatically.

Large aligning forces can be achieved with small deformation forces. The continuous aligning of the medium allows quick transactions since there are no time delays as for example transport stop, aligning, and again transport.

**Claims**

1. Alignment and transport roll (1) made of flexible material, said roll having - seen perpendicular to it's rotation axis (4) - a curved cross section and said roll comprising a ringlike thicker outer circumferential part (6) having a cross section with curved outer contour.

2. Roll as in claim 1, wherein alignment force is implied in one and the same direction (y), the direction in which the curvature points and deflection is active, regardless of the transport direction.

3. Roll as in claim 1 or 2, wherein alignment force is implied to the item to be transported (75) by rotating said roll either by drive means acting on said roll itself or moving the roll by said item to be transported in transport directions.

4. Alignment and transport roll made of flexible material, said roll having a cup-like or curved cross section - seen perpendicular to it's rotation axis (4) -, so that a hub part (2) of said roll and an outer circumferential part (6) lie in different planes (7, 100) said planes being essentially parallel to each other when said roll is undeflected and essentially perpendicular to the rotation axis (4) of said roll, said rotation axis being arranged essentially perpendicular to the transport direction (x) and to a side alignment guide (76) along which an item to be transported (75) is to be aligned, and said rotational plane of said hub part is essentially parallel to said side alignment guide, the structure (5) connecting said hub part and said outer circumferential part having different predetermined resiliency, so that upon deflecting said outer part toward said rotation axis and away from said rotational plane of said hub part, and upon rotation of said roll, the latter implies a force in alignment direction (y) toward said side alignment guide, said roll comprising a ringlike thicker outer circumferential part (6) having a cross section with curved outer contour.

5. Roll as in claim 4, wherein said thicker outer circumferential part (6) has the form of a doughnut-shaped ring that is attached to said structure (5) connecting said outer part and said hub part (2) said thicker outer circumferential part providing an essentially unchanged contact area ($A_1$) when in contact with said item to be transported essentially in all deflected positions.

6. Roll as in anyone of claim 1 to 5, wherein said thicker outer circumferential part comprises a circular contour opposite said item to be transported, the radius (R) taken two times being larger than the thickness of said structure connecting said hub part and said outer circumferential part.

7. Roll as in anyone of claim 1 to 6, wherein said thicker outer circumferential part - seen in cross-section - has the form of a closed circle (8, 9) or of a curved hook (10).

8. Roll as in anyone of claim 1 to 7, wherein said flexible material used for said roll is polyurethane polyester with preferably a hardness of 60 Shore A.

9. Roll as in anyone of the preceding claims, wherein on the side of said roll opposite to the one in which the alignment force is generated, said outer thicker circumferential part is limited in its possibility to deflect in the direction opposite to said alignment direction by limitation means.

10. Roll as in claim 8, wherein said limitation means is a fixed supporting structure (110).

11. Roll as in claim 10, wherein said limitation structure has the form of a cup-like disk, said disk being fixed to a shaft (113) rotatable about said rotation axis and comprising a circumferential rim (114) protruding in alignment direction and contacting in its limitation function said roll only in the area of its said thicker outer circumferential part or very close to it.

12. Roll as in claim 10, wherein a variable gap ($l_g$) is provided between said thicker outer circumferential part and said supporting structure, whereby the maximum gap length is the one in which the flipping over of said roll and its changing of the alignment direction is just avoided.

**13.** Roll as in claim 11 or 12, wherein the radius of said supporting structure is smaller than the radius of said roll.

**14.** Transport mechanism, wherein two rolls according to any one of the preceding claims are provided opposite each other such that they form a co-operating roller pair thus doubling the aligning effectiveness.

**15.** Roll as in anyone of claims 1 to 13 or mechanism as in claim 14, wherein it is used in an alignment station of a device for processing items, especially of different thickness and size, as for example for processing, especially printing, passbooks (75) in a self-service transaction station.

**16.** Roll as in anyone of claims 1 to 13, or mechanism as in claim 14, wherein it is used for aligning and transporting continuous forms.

**Patentansprüche**

**1.** Aus flexiblem Material gefertigte Ausrichte- und Transportrolle (1), wobei diese Rolle, senkrecht zu ihrer Rotationsachse (4) gesehen, einen gekrümmten Querschnitt besitzt, und wobei die erwähnte Rolle einen ringförmigen, dikkeren, äußeren Umfangsteil (6) enthält, der einen Querschnitt mit einem gekrümmten äußeren Rand hat.

**2.** Rolle gemäß Anspruch 1, wobei die Ausrichtekraft unabhängig von der Transportrichtung in ein und dieselbe Richtung (y) ausgeübt wird, nämlich die Richtung, in die die Krümmung zeigt und in die die Verbiegung erfolgt.

**3.** Rolle gemäß Ansprüchen 1 und 2, wobei die Ausrichtekraft auf den zu transportierenden Gegenstand (75) ausgeübt wird, indem die Rolle entweder durch Antriebsvorrichtungen, die auf die Rolle selbst wirken, gedreht wird, oder indem die Rolle durch den zu transportierenden Gegenstand in Transportrichtung bewegt wird.

**4.** Aus flexiblem Material gefertigte Ausrichte- und Transportrolle, wobei die Rolle - senkrecht zu ihrer Rotationsachse (4) gesehen - einen tassenförmigen oder gekrümmtem Querschnitt besitzt, so daß der Nabenteil (2) der Rolle und ein äußerer Umfangsteil (6) in verschiedenen Ebenen (7, 100) liegen, wobei diese Ebenen im wesentlichen parallel zueinander liegen, wenn die Rolle unverbogen ist, und im wesentlichen senkrecht auf der Rotationsachse (4)

der Rolle stehen, wobei diese Rotationsachse im wesentlichen senkrecht zur Transportrichtung (x) und einer seitlichen Ausrichteführung (76) angebracht ist, an der ein zu transportierender Gegenstand (75) auszurichten ist, und wobei die erwähnte Drehebene des erwähnten Nabenteils im wesentlichen parallel zur erwähnten Ausrichteführung liegt, wobei das Teil (5), das den Nabenbereich und den erwähnten äußeren Umfangsteil verbindet, unterschiedliche, festgelegte Elastizitäten hat, so daß durch Verbiegung des erwähnten äußeren Teils zur erwähnten Rotationsachse hin und weg von der erwähnten Drehebene des erwähnten Nabenteils und durch die Drehung der erwähnten Rolle, letztere eine Kraft in Ausrichterichtung (y) zur erwähnten seitlichen Ausrichteführung hin ausübt, wobei die Rolle einen ringförmigen, dickeren, äußeren Umfangsteil (6) enthält, der einen Querschnitt mit gekrümmtem äußeren Rand hat.

**5.** Rolle gemäß Anspruch 4, wobei der äußere Umfangsteil (6) die Form eines wulstförmigen Rings hat, der mit dem Teil (5) verbunden ist, das den erwähnten äußeren Bereich und den Nabenteil (2) verbindet, wobei der dickere, äußere Umfangsteil eine in allen Verbiegungszuständen im wesentlichen unveränderte Kontaktfläche ($A_1$) bietet, wenn er mit dem erwähnten, zu transportierenden Gegenstand in Kontakt ist.

**6.** Rolle gemäß einem der Ansprüche 1 bis 5, wobei der dickere, äußere Umfangsteil gegenüber dem zu transportierenden Gegenstand einen kreisförmigen Rand aufweist, wobei der Radius (R) doppelt so groß gewählt wird, wie die Dicke des erwähnten Teils, das das Nabenteil mit dem äußeren Umfangsteil verbindet.

**7.** Rolle gemäß einem der Ansprüche 1 bis 6, wobei der dickere, äußere Umfangsteil - im Querschnitt gesehen - die Form eines geschlossenen Kreises (8, 9) oder eines gebogenen Hakens (10) besitzt.

**8.** Rolle gemäß einem der Ansprüche 1 bis 7, wobei das erwähnte, flexible Material, das für die Rolle verwendet wird, Polyurethanpolyester mit einer bevorzugten Härte von 60 Shore A ist.

**9.** Rolle gemäß einem der vorangegangenen Ansprüche, wobei auf der Seite der Rolle, die der Seite gegenüberliegt, auf der die Ausrichtekraft erzeugt wird, der erwähnte, äußere, dickere Umfangsteil in seinen Verbiegungsmöglichkeiten entgegen der erwähnten Ausrichterichtung durch Begrenzungsvorrichtungen eingeschränkt wird.

10. Rolle gemäß Anspruch 8, wobei die Begrenzungsvorrichtung eine starre Haltevorrichtung ist.

11. Rolle gemäß Anspruch 10, wobei die Begrenzungsvorrichtung die Form einer tassenförmigen Scheibe hat, wobei diese Scheibe an einer um die erwähnte Rotationsachse drehbaren Achse (113) befestigt ist und eine Umfangsfelge (114) besitzt, die in Ausrichterichtung hervorsteht und in ihrer Begrenzungsfunktion die Rolle nur im Bereich ihres erwähnten, dickeren, äußeren Umfangsteils oder sehr nahe bei ihm berührt.

12. Rolle gemäß Anspruch 10, wobei eine variable Lücke ($l_g$) zwischen dem dickeren, äußeren Umfangsteil und der Haltevorrichtung vorgesehen ist, wobei die maximale Lückenlänge diejenige ist, bei der das Umklappen der Rolle und ihre Änderung der Ausrichterichtung gerade noch verhindert wird.

13. Rolle gemäß Anspruch 11 oder 12, wobei der Radius der Haltevorrichtung kleiner ist als der Radius der Rolle.

14. Transportmechanismus, wobei zwei Rollen gemäß einem der vorherigen Ansprüche einander gegenüber angeordnet werden, so daß sie ein zusammenarbeitendes Rollenpaar bilden und so die Effektivität der Ausrichtung verdoppeln.

15. Rolle gemäß einem der Ansprüche 1 bis 13 oder Mechanismus wie in Anspruch 14, wobei sie in der Ausrichteeinheit einer Vorrichtung zur Bearbeitung von Gegenständen, insbesondere unterschiedlicher Dicke und Größe, eingesetzt wird, wie zum Beispiel zum Bearbeiten, insbesondere zum Bedrucken, von Sparbüchern (75) in einer Buchungsvorrichtung zur Selbstbedienung.

16. Rolle gemäß einem der Ansprüche 1 bis 13 oder Mechanismus wie in Anspruch 14, wobei sie zum Ausrichten und Transportieren von Endlospapier benutzt wird.

**Revendications**

1. Rouleau d'alignement et de transport (1) en matière flexible, ledit rouleau ayant - vu perpendiculairement à son axe de rotation (4) - une section transversale incurvée et ledit rouleau comportant une partie circonférentielle extérieure annulaire plus épaisse (6) dont la section transversale a un contour extérieur courbe.

2. Rouleau suivant la revendication 1, dans lequel une force d'alignement est engendrée dans une seule et même direction (y), qui est la direction dans laquelle la courbure du rouleau est orientée à la périphérie du rouleau et la flexion est effective, quelle que soit la direction de transport.

3. Rouleau suivant la revendication 1 ou 2, dans lequel une force d'alignement est exercée sur l'article à transporter (75) par rotation dudit rouleau au moyen d'un entraînement agissant sur ledit rouleau lui-même ou mise en mouvement du rouleau par ledit article à transporter dans les directions de transport.

4. Rouleau d'alignement et de transport en matière flexible, ledit rouleau ayant une section transversale incurvée ou en forme de cuvette - vu perpendiculairement à son axe de rotation (4) -, de sorte qu'un moyeu (2) dudit rouleau et une partie circonférentielle extérieure (6) se trouvent dans des plans différents (7,100), ces plans étant sensiblement parallèles l'un à l'autre lorsque ledit rouleau n'est pas fléchi et sensiblement perpendiculaires à l'axe de rotation (4) du dit rouleau, ledit axe de rotation étant disposé sensiblement perpendiculairement à la direction de transport (x) et à un guidage d'alignement latéral (76) le long duquel on veut aligner un article à transporter (75), et ledit plan de rotation dudit moyeu est sensiblement parallèle audit guidage d'alignement latéral, la structure (5) qui relie ledit moyeu et ladite partie circonférentielle extérieure ayant une élasticité prédéterminée différente de sorte que, lors de la flexion de ladite partie extérieure vers ledit axe de rotation et à l'opposé dudit plan de rotation dudit moyeu, et lors de la rotation dudit rouleau, ce dernier engendre une force dans la direction d'alignement (y) vers ledit guidage d'alignement latéral, ledit rouleau comportant une partie circonférentielle extérieure annulaire plus épaisse (6) dont la section transversale a un contour extérieur courbe.

5. Rouleau suivant la revendication 4, dans lequel ladite partie circonférentielle extérieure plus épaisse (6) a la forme d'un anneau torique qui est fixé à ladite structure (5) reliant ladite partie extérieure et ledit moyeu (2), ladite partie circonférentielle extérieure plus épaisse procurant une surface de contact sensiblement constante

(A$_1$),lorsqu'elle est en contact avec ledit article à transporter, sensiblement dans toutes les positions de flexion.

6. Rouleau suivant l'une quelconque des revendications 1 à 5, dans lequel ladite partie circonférentielle extérieure plus épaisse présente un contour circulaire en face dudit article à transporter, le rayon (R) doublé étant plus grand que l'épaisseur de ladite structure qui relie ledit moyeu et ladite partie circonférentielle extérieure.

7. Rouleau suivant l'une quelconque des revendications 1 à 6, dans lequel ladite partie circonférentielle extérieure plus épaisse - vue en section transversale - a la forme d'un cercle fermé (8,9) ou d'un crochet courbe (10).

8. Rouleau suivant l'une quelconque des revendications 1 à 7, dans lequel ladite matière flexible utilisée pour ledit rouleau est un polyester polyuréthane ayant de préférence une dureté de 60 Shore A.

9. Rouleau suivant l'une quelconque des revendications précédentes, dans lequel, du côté dudit rouleau opposé au côté vers lequel s'exerce la force d'alignement, ladite partie circonférentielle extérieure plus épaisse est limitée, dans sa possibilité de flexion dans la direction opposée à ladite direction d'alignement, par des moyens de limitation.

10. Rouleau suivant la revendication 8, dans lequel lesdits moyens de limitation comprennent une structure d'appui fixe (110).

11. Rouleau suivant la revendication 10, dans lequel ladite structure de limitation a la forme d'un disque en cuvette, ce disque étant fixé à un arbre (113) qui peut tourner autour dudit axe de rotation et comportant un rebord circonférentiel (14) qui fait saillie dans la direction d'alignement et vient en contact, dans sa fonction de limitation,avec ledit rouleau seulement dans la région de sadite partie circonférentielle extérieure plus épaisse, ou très près de celle-ci.

12. Rouleau suivant la revendication 10, dans lequel un intervalle variable (I$_g$) est prévu entre ladite partie circonférentielle extérieure plus épaisse et ladite structure d'appui, la longueur maximale de l'intervalle étant celle qui évite juste l'inversion de courbure dudit rouleau et son changement de la direction d'alignement.

13. Rouleau suivant la revendication 11 ou 12, dans lequel le rayon de ladite structure d'appui est plus petit que le rayon dudit rouleau.

14. Mécanisme de transport, dans lequel deux rouleaux suivant l'une quelconque des revendications précédentes sont prévus en opposition de sorte qu'ils constituent une paire de rouleaux coopérants, ce qui double l'efficacité d'alignement.

15. Rouleau suivant l'une quelconque des revendications 1 à 13 ou mécanisme suivant la revendication 14, qui est utilisé dans une station d'alignement d'un dispositif pour le traitement d'objets, en particulier de différentes épaisseurs et dimensions, par exemple pour le traitement et en particulier l'impression de livrets (75) dans un appareil de transactions à self-service.

16. Rouleau suivant l'une quelconque des revendications 1 à 13, ou mécanisme suivant la revendication 14, qui est utilisé pour l'alignement et le transport de documents continus.

FIG. 1

FIG. 2

FIG. 3A

FIG. 3B

12

FIG. 4A

FIG. 4B

FIG. 4C

FIG. 5A

FIG. 5B

FIG. 5C

FIG. 5D

FIG. 6A

FIG. 6B

FIG. 6C

FIG. 6D

FIG. 7

FIG. 8A

FIG. 8C

FIG. 8B

FIG. 9

FIG. 10

FIG. 11

FIG. 12

FIG. 13

FIG. 14

FIG. 15

**FIG. 16A**

**FIG. 16B**